# EUROPEAN PATENT APPLICATION

(11) **EP 3 151 016 A2**
(43) Date of publication of application: **05.04.2017**
(21) Application number: 16187491.2
(22) Date of filing: 06.09.2016
(51) Int. Cl.: G01P 3/487, G01P 3/486, G01P 13/04

(54) **DETERMINING ROTATIONAL SPEED OR DIRECTION OF A BODY**

(30) Priority: 08.09.2015 GB 201515917
(71) Applicant: Airbus Operations Limited, Bristol BS34 7PA (GB)
(72) Inventor: WOOD, Christopher, Bristol, Avon BS34 7PA (GB); CIPULLO, Alessio, Bristol, Avon BS34 7PA (GB)
(74) Representative: EIP

(57) **Abstract**

Disclosed is a device (1) for use in determining the rotational speed of a body. The device (1) comprises a sensor (20) for detecting the strength of a magnetic field, and a body (10) that is rotatable relative to the sensor (20) about an axis (A-A). The body (10) comprises a plurality of circumferentially spaced magnetic regions (11, 12, 13). The device (1) is arranged so that, during rotation of the body (10) relative to the sensor (20), the maximum strength detectable by the sensor (20) of a first magnetic field of a first (11) of the magnetic regions (11, 12, 13) is different to the maximum strength detectable by the sensor (20) of a second magnetic field of a second (12) of the magnetic regions (11, 12, 13). By determining the time between detected peaks of the magnetic field strength it is possible to determine a rotational speed.

Disclosed is also a device for use in determining a rotational direction, in which at least three regions having different characteristics that can be identified by a sensor are provided. The regions can have different magnetic characteristics like magnetic field strength or field direction, they could have different visual characteristics like colour or tone, or different dimensional characteristics like radius or thickness.
The direction can then be determined by the order of the characteristics, e.g. high - medium - low or low - medium - high.

The sensor may comprise an optical element mechanically connected to a magnetostrictive element which changes shape or dimension in response to variations of the magnetic field.

## Description

### TECHNICAL FIELD

The present invention relates to devices for use in determining rotational speed or rotational direction of a body, to apparatuses for determining rotational speed or rotational direction of a body, to methods of determining rotational speed or rotational direction of a body, and to vehicles and aircraft landing gear comprising such devices or apparatuses.

### BACKGROUND

Detectors for detecting rotational speed of a body, such as a wheel, are known. Some such detectors work on the basis of a magnetic effect, producing a variance in a magnetic field which is converted to an electrical signal. However, at low rotational speeds of the body, the output level is relatively low. Some such detectors are unable to be used below a certain rotational speed of the body.

Some detectors comprise a rotary part carrying a plurality of magnetic targets, and a stationary part including a Hall effect sensor for detecting the magnetic fields of the targets as the rotary part rotates relative to the sensor. However, such detectors either are unable to determine the rotational direction of the body, or require more than one sensor to do so. Moreover, Hall effect sensors require electrical components at the sensor head.

Other detectors have optical sensors for detecting rotation characteristics of a rotating body. However, the performance of such sensors relies on the sensors being sufficiently clean to carry out the optical sensing.

### SUMMARY

A first aspect of the present invention provides a device for use in determining the rotational speed of a body, the device comprising:
a sensor for detecting the strength of a magnetic field; and
a body that is rotatable relative to the sensor about an axis, the body comprising a plurality of circumferentially spaced magnetic regions;
wherein the device is arranged so that during rotation of the body relative to the sensor the maximum strength detectable by the sensor of a first magnetic field of a first of the magnetic regions is different to the maximum strength detectable by the sensor of a second magnetic field of a second of the magnetic regions.

Optionally, the magnetic field strength of the second magnetic region is greater than the magnetic field strength of the first magnetic region.

Optionally, the device is arranged so that the maximum strength detectable by the sensor of a third magnetic field of a third of the magnetic regions is different to each of the maximum strengths detectable by the sensor of the first and second magnetic fields.

Optionally, the magnetic field strength of the second magnetic region is greater than the magnetic field strength of the first magnetic region, and the magnetic field strength of the third magnetic region is greater than the magnetic field strength of the second magnetic region.

Optionally, the second magnetic region is circumferentially located on the body between the first and third magnetic regions.

Optionally, the body comprises a plurality of each of the first, second and third magnetic regions, and each of the second magnetic regions is circumferentially located on the body between one of the first magnetic regions and one of the third magnetic regions.

Optionally, the sensor is for producing a signal which is indicative of a strength of a magnetic field detected by the sensor.

Optionally, the magnetic regions are equally radially spaced from an axis about which the body is rotatable relative to the sensor.

Optionally, the magnetic regions are aligned axially relative to each other.

Optionally, the magnetic regions are equally circumferentially spaced apart from each other.

Optionally, the body comprises a member, and each of the regions comprises a discrete magnetic element carried by the member.

Optionally, the sensor is a magnetostrictive sensor or a magnetostrictive optical sensor.

Optionally, the magnetostrictive optical sensor comprises an optical element located in an optical fibre.

Optionally, the magnetostrictive optical sensor comprises a magnetostrictive element and an optical element mechanically connected to the magnetostrictive element, wherein a change in shape or dimension of the magnetostrictive element causes a change in shape or dimension of the optical element.

Optionally, the optical element comprises a Fibre Bragg Grating (FBG).

A second aspect of the present invention provides a device for use in determining a rotational direction of a body, the device comprising:
a sensor; and
a body that is rotatable relative to the sensor about an axis, the body comprising circumferentially spaced first, second and third regions, wherein a characteristic of each of the first, second and third regions differs from the characteristic of each other of the first, second and third regions;
wherein the sensor is for detecting the characteristic of the respective first, second and third regions in turn as the body rotates relative to the sensor.

Optionally, the body comprises a plurality of each of the first, second and third regions, and each of the second regions is circumferentially located between one of the first regions and one of the third regions.

Optionally, the characteristic is a magnetic characteristic.

Optionally, the magnetic characteristic is magnetic field strength.

Optionally, the magnetic field strength of each of the first, second and third regions is greater than zero.

Optionally, the magnetic regions are equally radially spaced from an axis about which the body is rotatable relative to the sensor.

Optionally, the magnetic regions are aligned axially relative to each other.

Optionally, the magnetic regions are equally circumferentially spaced apart from each other.

Optionally, the body comprises a member, and each of the regions comprises a discrete magnetic element carried by the member.

Optionally, the sensor is a magnetostrictive sensor or a magnetostrictive optical sensor.

Optionally, the magnetostrictive optical sensor comprises an optical element located in an optical fibre.

Optionally, the magnetostrictive optical sensor comprises a magnetostrictive element and an optical element mechanically connected to the magnetostrictive element, wherein a change in shape or dimension of the magnetostrictive element causes a change in shape or dimension of the optical element.

Optionally, the optical element comprises a Fibre Bragg Grating (FBG).

A third aspect of the present invention provides apparatus for determining the rotational speed of a body, wherein the apparatus comprises a device according to the first aspect of the present invention, the sensor is for producing a signal which is indicative of a strength of a magnetic field detected by the sensor, and the apparatus is arranged to determine a rotational speed of the body relative to the sensor based on first and second signals produced by the sensor which are respectively indicative of strengths of the first and second magnetic fields detected by the sensor.

A fourth aspect of the present invention provides apparatus for determining the rotational direction of a body, wherein the apparatus comprises a device according to the second aspect of the present invention, and the apparatus is arranged to determine a rotational direction of the body relative to the sensor based on signals produced by the sensor which are respectively indicative of the characteristic of the first, second and third regions detected by the sensor.

A fifth aspect of the present invention provides aircraft landing gear comprising the device of either of the first and second aspects of the present invention or the apparatus of either of the third and fourth aspects of the present invention, and a wheel, wherein the body is rotatably fixed relative to the wheel.

A sixth aspect of the present invention provides a vehicle comprising the device of either of the first and second aspects of the present invention or the apparatus of either of the third and fourth aspects of the present invention.

Optionally, the vehicle is an aircraft.

Optionally, the aircraft comprises the aircraft landing gear of the fifth aspect of the present invention.

A seventh aspect of the present invention provides a method of determining the rotational speed of a body, the method comprising:
rotating a body comprising a plurality of circumferentially spaced magnetic regions about an axis and relative to a sensor for detecting the strength of a magnetic field;
detecting by the sensor a strength of a first magnetic field of a first of the magnetic regions during the rotation of the body relative to the sensor, and producing by the sensor a first signal which is indicative of the detected strength of the first magnetic field;
detecting by the sensor a strength of a second magnetic field of a second of the magnetic regions during the rotation of the body relative to the sensor, and producing by the sensor a second signal which is indicative of the detected strength of the second magnetic field, wherein the strength detected by the sensor of the first magnetic field is different to the strength detected by the sensor of the second magnetic field; and
determining, based on the first and second signals, a rotational speed of the body relative to the sensor.

An eighth aspect of the present invention provides a method of determining the rotational direction of a body, the method comprising:
rotating a body comprising circumferentially spaced first, second and third regions about an axis and relative to a sensor, wherein a characteristic of each of the first, second and third regions differs from the characteristic of each other of the first, second and third regions; and
detecting by the sensor the characteristic of the first, second and third regions as the body rotates relative to the sensor, and producing by the sensor signals which are respectively indicative of the detected characteristic of the first, second and third regions; and
determining, based on the signals, a rotational direction of the body relative to the sensor.

### BRIEF DESCRIPTION OF THE DRAWINGS

Embodiments of the invention will now be described, by way of example only, with reference to the accompanying drawings, in which:
Figure 1 shows a schematic side view of an example of a device for use in determining the rotational speed and rotational direction of a body, in accordance with an embodiment of the invention;
Figure 2 shows a schematic front view of the device of Figure 1;
Figure 3 shows a schematic diagram of an example of apparatus for determining the rotational speed and rotational direction of a body, in accordance with an embodiment of the invention;
Figure 4 shows a schematic side view of an example of aircraft landing gear of an embodiment of the invention; and
Figure 5 shows a schematic side view of an example of an aircraft of an embodiment of the invention.

### DETAILED DESCRIPTION

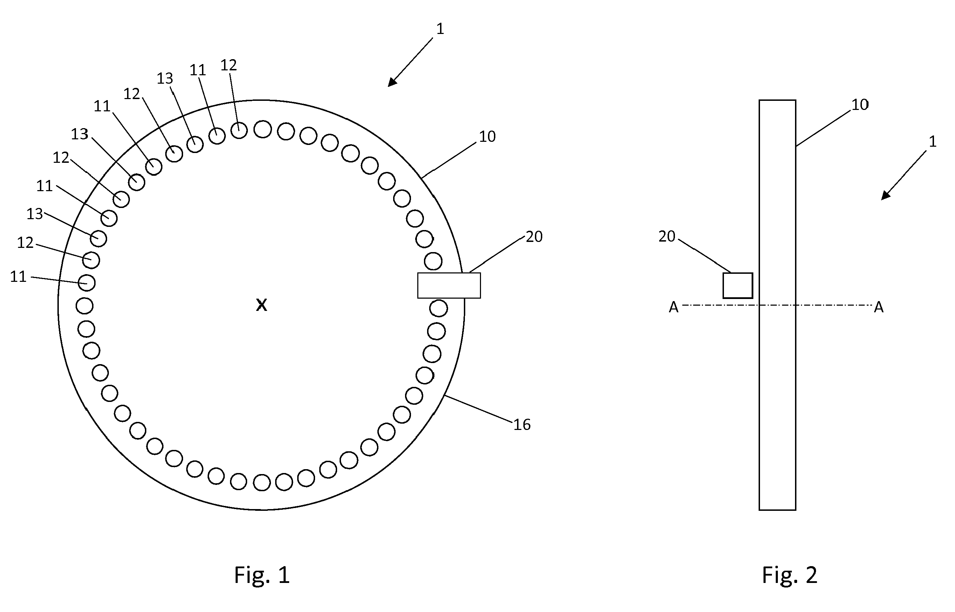

Referring to Figures 1 and 2, there are shown a schematic side view and a schematic front view of an example of a device according to an embodiment of the invention. The device is for use in determining the rotational speed and rotational direction of a body. The device 1 comprises the body 10 and a sensor 20. The body 10 comprises a plurality of circumferentially spaced or arranged magnetic regions 11, 12, 13 and is rotatable relative to the sensor 20 about an axis A-A. The magnetic regions 11, 12, 13 therefore rotate relative to the sensor 20 as the body 10 rotates relative to the sensor 20. The sensor 20 is for detecting the strength of a magnetic field. The body 10 and the sensor 20 of this embodiment are relatively arranged so that the sensor 20 is able to detect the strength of respective magnetic fields of the magnetic regions 11, 12, 13 as the body 10 rotates relative to the sensor 20.

In some embodiments, the magnetic regions 11, 12, 13 may be differently-magnetised regions of a unitary body 10, for example. However, the body 10 of this embodiment comprises a member 16, and each of the magnetic regions 11, 12, 13 comprises a discrete magnetic element carried by the member 16. For example, each of the discrete magnetic elements may be affixed to the member 16, such as by adhesive, one or more screws, one or more nuts and bolts, one or more rivets, or the like. In this embodiment, the magnetic regions 11, 12, 13 are non-movable relative to each other and relative to the member 16. The member 16 may be made of any suitable material, such as a plastics material, a metal, or a metal alloy. The member 16 is non-magnetic, so as not itself to be detectable by the sensor 20. However, in other embodiments, the member 16 may be magnetic, although preferably only to a degree that is considerably smaller than the degree to which each of the magnetic regions 11, 12, 13 is magnetic.

The body 10 comprises a plurality of each of the first, second and third magnetic regions 11, 12, 13. Each of the first magnetic regions 11 has a magnetic field strength that is equal, or substantially equal, to each other of the first magnetic regions 11. Moreover, each of the second magnetic regions 12 has a magnetic field strength that is equal, or substantially equal, to each other of the second magnetic regions 12. Furthermore, each of the third magnetic regions 13 has a magnetic field strength that is equal, or substantially equal, to each other of the third magnetic regions 13. However, the magnetic field strength of each of the third magnetic regions 13 is greater than the magnetic field strength of each of the second magnetic regions 12, and the magnetic field strength of each of the second magnetic regions 12 is greater than the magnetic field strength of each of the first magnetic regions 11. That is, the magnitude of the magnetic field of each of the third magnetic regions 13 is greater than the magnitude of the magnetic field of each of the second magnetic regions 12, and the magnitude of the magnetic field of each of the second magnetic regions 12 is greater than the magnitude of the magnetic field of each of the first magnetic regions 11. Therefore, each of the first magnetic regions 11 may be considered to have a "low" magnetic strength, each of the second magnetic regions 12 may be considered to have a "medium" magnetic strength, and each of the third magnetic regions 13 may be considered to have "high" magnetic strength.

In this embodiment, the magnetic field strength of each of the first, second and third magnetic regions 11, 12, 13 is greater than zero. However, in an alternative embodiment, the magnetic field strength of each of the first magnetic regions 11 may be zero.

In this embodiment, each of the second magnetic regions 12 is circumferentially located on the body 10 between one of the first magnetic regions 11 and one of the third magnetic regions 13. Therefore, as the body 10 rotates relative to the sensor 20 in use, the magnetic regions pass the sensor 20 in the order high-medium-low or in the order low-medium-high, depending on the direction of rotation of the body 10 relative to the sensor 20.

In this embodiment, the magnetic regions 11, 12, 13 are equally, or substantially equally, circumferentially spaced apart from each other. However, in other embodiments, the circumferential spacing apart of one or more pairs of adjacent magnetic regions 11, 12, 13 may be different to the circumferential spacing apart of one or more other pairs of adjacent magnetic regions 11, 12, 13.

In this embodiment, the magnetic regions 11, 12, 13 are equally, or substantially equally, radially spaced from the axis A-A about which the body 10 is rotatable relative to the sensor 20. In this embodiment, the magnetic regions 11, 12, 13 also are aligned, or substantially aligned, axially relative to each other. That is, all of the magnetic regions 11, 12, 13 are located at the same axial position relative to the axis A-A. Therefore, as the body 10 rotates relative to the sensor 20, all of the magnetic regions 11, 12, 13 travel along the same, or substantially the same, circular path. However, as is discussed in more detail below by way of example, one or both of these conditions may not be true in other embodiments.

In this embodiment, the sensor 20 also is fixed relative to the axis A-A. Therefore, as the body 10 rotates relative to the sensor 20 in use, each of the magnetic regions 11, 12, 13 passes the sensor 20 at the same, or substantially the same, distance from the sensor 20. That is, the closest any one of the magnetic regions 11, 12, 13 is able to get to the sensor 20 during rotation of the body 10 relative to the sensor 20 is the same, or substantially the same, as any other of the magnetic regions 11, 12, 13 is able to get to the sensor 20.

In this embodiment, the sensor 20 is fixed relative to the axis A-A at a position axially adjacent the body 10, and axially adjacent the circular path along which the magnetic regions 11, 12, 13 travel during rotation of the body 10 relative to the sensor 20. However, in other embodiments, the sensor 20 may be fixed at a different position. For example, the sensor 20 could be fixed relative to the axis A-A at a position radially adjacent the body 10. That is, the sensor 20 may be located further from the axis A-A than are the magnetic regions 11, 12, 13.

The sensor 20 of this embodiment is for producing a signal which is indicative of a strength of a magnetic field detected by the sensor 20. Respective different types of sensor 20 could be used, such as a Hall effect sensor, a magnetoresistive sensor, or a magnetostrictive sensor. In this embodiment, the sensor 20 is a magnetostrictive optical sensor.

The sensor 20 of this embodiment comprises a magnetostrictive element. A shape or dimension of the magnetostrictive element varies in response to a varying magnetic field strength applied to the magnetostrictive element. The strength of a magnetic field proximate the magnetostrictive element is determined by measuring the resulting change in shape or dimension of the magnetostrictive element. The magnetostrictive element may be made, for example, from one or more magnetostrictive materials selected from the group consisting of: colbalt, nickel, TbₓD_{y1-x}Fe₂ (x ∼ 0.3) (e.g. Terfenol-D), and Fe₈₁Si_{3.5}B_{13.5}C₂ (e.g. Metglas ®).

In a magnetostrictive optical sensor, the change in shape or dimension of the magnetostrictive element is interrogated optically. In this embodiment, an optical element, that is itself able to change shape or dimension, is mechanically connected to the magnetostrictive element. In this embodiment, the optical element is located in an optical fibre, which is mechanically connected to the magnetostrictive material, such as by being bonded or adhered thereto. A change in shape or dimension of the magnetostrictive element causes a change in shape or dimension of the optical element. One or more optical characteristics of the optical element also change in response to the change in shape or dimension of the optical element.

In this embodiment, the optical element of the sensor 20 comprises a Fibre Bragg Grating (FBG). The FBG is a distributed Bragg reflector located within the optical fibre and comprises periodic variations in the refractive index of the core of the fibre along a section of the length of the optical fibre. The wavelength of a band of light reflected from the FBG is dependent on the axial strain of the fibre. As the FBG is mechanically connected to (for example bonded to, affixed to, or tightly wound around) the magnetostrictive element, a change in shape or dimension of the magnetostrictive element changes the axial strain in the FBG, which in turn changes the wavelength of a band of light reflected by the FBG. The wavelength of a band of light reflected by the FBG thus acts as a signal which is indicative of a strength of a magnetic field detected by the sensor 20. By monitoring light reflected from the FBG, the presence of a magnetic field detected by the sensor 20 is able to be detected, and the strength of the magnetic field detected by the sensor 20 is able to be determined.

In another embodiment, the optical element of the sensor 20 may comprise a Fibre Fabry-Perot interferometer (FFP). The FFP comprises two reflecting surfaces located within an optical fibre separated by a distance. Light reflecting from a first of the reflective surfaces interferes with light reflecting from a second of the reflective surfaces. The phase difference between the two reflected beams is a function of the wavelength of the light, and of the distance between the reflective surfaces. Therefore, for a fixed wavelength of interrogation light, a change in the distance between the two reflective surfaces results in an associated change in the power of light reflected from the FFP. Alternatively, when a broadband interrogation light source is used, a change in the distance between the two reflective surfaces results in an associated change in the spectrum of light reflected from the FFP, i.e. an associated change in the wavelength of a band of light reflected by the FFP. With the FFP mechanically connected to (for example bonded to, affixed to, or tightly wound around) the magnetostrictive element of the sensor 20, a change in shape or dimension of a magnetostrictive element changes the distance between the reflective surfaces in the FFP, which in turn changes the wavelength of a band of light reflected by the FFP. The wavelength of a band of light reflected by the FFP thus acts as a signal which is indicative of a strength of a magnetic field detected by the sensor 20. By monitoring light reflected from the FFP, the presence of a magnetic field detected by the sensor 20 is able to be detected, and the strength of the magnetic field detected by the sensor 20 is able to be determined.

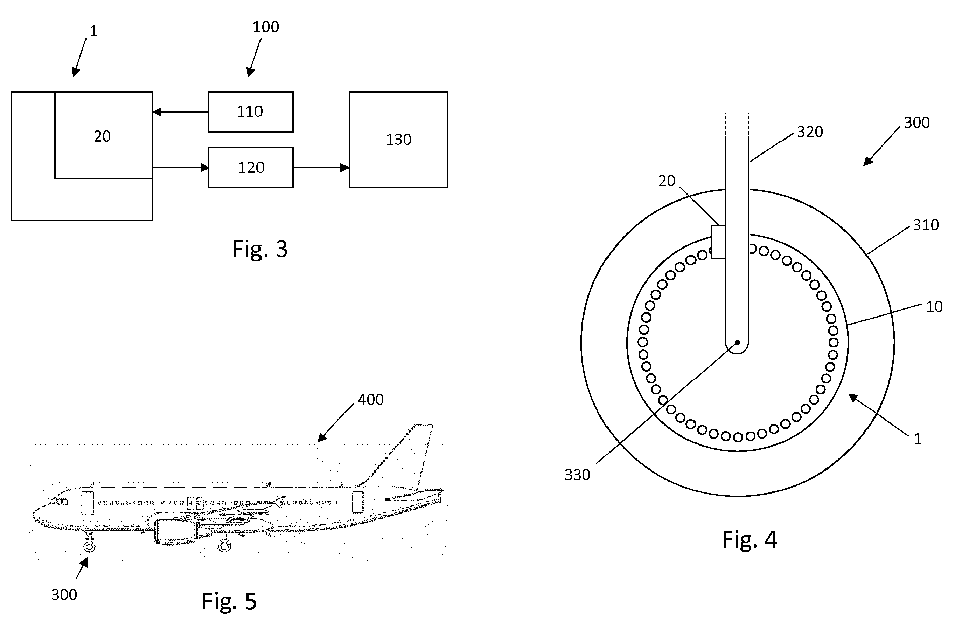

Referring to Figure 3, there is shown a schematic diagram of an example of apparatus for determining the rotational speed and rotational direction of a body, according to an embodiment of the invention. The apparatus 100 of this embodiment comprises the device 1 of Figures 1 and 2. The apparatus 100 is arranged to determine a rotational speed of the body 10 relative to the sensor 20 based on first and second signals produced by the sensor 20. The first and second signals are respectively indicative of strengths of the first and second magnetic fields of the first and second magnetic regions 11, 12, as detected by the sensor 20 in use. The apparatus 100 also is arranged to determine a rotational direction of the body 10 relative to the sensor 20 based on first, second and third signals produced by the sensor 20. The first, second and third signals are respectively indicative of strengths of the first, second and third magnetic fields of the magnetic regions 11, 12, 13, as detected by the sensor 20 in use.

In this embodiment, the apparatus 100 comprises a source of light 110, a light measurer 120, and a processor 130. The light source 110 and the light measurer 120 are optically connected to the sensor 20 by one or more optical fibres. The light source 110 is arranged to output light towards the optical element of the sensor 20, and the light measurer 120 is arranged to receive light reflected from the optical element of the sensor 20. The processor 130 is communicatively connected to the light measurer 120.

In this embodiment, the processor 130 is arranged to determine a rotational speed of the body 10 relative to the sensor 20 based on first and second signals produced by the sensor 20. The first and second signals are respectively indicative of strengths of the first and second magnetic fields of the first and second magnetic regions 11, 12 as detected by the sensor 20. In this embodiment, the processor 130 also is arranged to determine a rotational direction of the body 10 relative to the sensor 20 based on first, second and third signals produced by the sensor 20, which are respectively indicative of the strengths of the first, second and third magnetic fields of the first, second and third magnetic regions 11, 12, 13 as detected by the sensor 20. These features of the apparatus 100 are described in more detail below.

The light source 110 may be, for example, a tuned laser or a broadband light source. In use, the light source 110 outputs light that is directed to the optical element. When the light source 110 is a broadband light source, the light reflected from the optical element is directed towards the light measurer 120, which may be a wavelength meter that measures the wavelength of the light reflected from the optical element. An indication of the wavelength measured by light measurer may then be provided to the processor 130. The processor 130 may then process the wavelength measured by light measurer 120, and convert the measured wavelength into a signal which is indicative of a strength of a magnetic field to which the magnetostrictive element of the sensor 20 is subjected at that point in time.

When the light source 110 is a tuneable narrow band light source, such as a tuneable laser, the light measurer 120 may be a photodiode that measures the intensity of light reflected from the optical element. In some embodiments, an analogue to digital converter may convert a signal from the photodiode into a digital signal which is provided to the processor 130. In some embodiments, the processor 130 controls the tuneable narrow band light source to emit light successively at different wavelengths, and at the same time monitors light intensity signals received from the photodiode. The processor 130 can thus determine for which emitted wavelength the highest intensity of reflected light is detected, and thereby determine the wavelength of light most reflected by the optical element at that point in time. The processor 130 may then convert the determined wavelength into a signal which is indicative of a strength of a magnetic field to which the magnetostrictive element of the sensor 20 is subjected at that point in time.

In this embodiment, the device 1 is arranged so that, during rotation of the body 10 relative to the sensor 20, the maximum strength detectable by the sensor 20 of the magnetic field of any one of the first magnetic regions 11 is different to the maximum strength detectable by the sensor 20 of the magnetic field of any one of the second magnetic regions 12. Furthermore, the device 1 is arranged so that, during rotation of the body 10 relative to the sensor 20, the maximum strength detectable by the sensor 20 of the magnetic field of any one of the third magnetic regions 13 is different to the maximum strength detectable by the sensor 20 of the magnetic field of any one of the first and second magnetic regions 11, 12. In this embodiment, this is effected by the above-described features that the magnetic field strength of each of the third magnetic regions 13 is greater than the magnetic field strength of each of the second magnetic regions 12, which in turn are greater than the magnetic field strengths of each of the first magnetic regions 11.

In use, as the body 10 rotates relative to the sensor 20, the movement of each of the magnetic regions 11, 12, 13 past the sensor 20 causes the magnetostrictive element of the sensor 20 to change shape or dimension. As discussed above, this causes the optical element to change shape or dimension, which in turn changes the wavelength of a band of light reflectable by the optical element.

By monitoring the wavelengths of light reflected by the optical element over time, the processor 130 is able to determine the time between peaks of the detected strengths of the magnetic fields to which the magnetostrictive element of the sensor 20 is subjected by the magnetic regions 11, 12, 13. Using this information in combination with data representative of the circumferential spacing of the magnetic regions 11, 12, 13 of the body 10, the processor is thus able to determine a rotational speed of the body 10.

By monitoring the wavelengths of light reflected by the optical element over time, the processor 130 is able to determine the order in which the magnetostrictive element of the sensor 20 is being subjected to different strength magnetic fields by the first, second and third magnetic regions 11, 12, 13. That is, the processor 130 is able to determine whether the magnetic regions 11, 12, 13 are passing the sensor 20 in the order high-medium-low or in the order low-medium-high. The processor 130 is thus able to use this determined order to determine the rotational direction of the body 10 relative to the sensor 20.

In embodiments other than those discussed above, the first, second and third magnetic regions 11, 12, 13 may not all be equally, or substantially equally, spaced from an axis A-A and/or may not all be aligned, or substantially aligned, axially relative to each other. Moreover, the magnetic field strengths of all the first, second and third magnetic regions 11, 12, 13 may be equal, or substantially equal. In such alternative embodiments, each of the first magnetic regions 11 may pass the sensor 20 at a first distance from the sensor 20, each of the second magnetic regions 12 may pass the sensor 20 at a second distance from the sensor 20, and each of the third magnetic regions 13 may pass the sensor 20 at a third distance from the sensor 20, where the first distance is greater than the second distance, and the second distance is greater than the third distance. The device 1 would thus still be arranged so that the maximum strength detectable by the sensor 20 of the magnetic field of any one of the first magnetic regions 11 is different to the maximum strength detectable by the sensor 20 of the magnetic field of any one of the second magnetic regions 12. Furthermore, the device 1 would still be arranged so that the maximum strength detectable by the sensor 20 of the magnetic field of any one of the third magnetic regions 13 is different to the maximum strength detectable by the sensor 20 of the magnetic field of any one of the first and second magnetic regions 11, 12.

In the above-described embodiments, since the device 1 does not need any electrical wiring, such as for powering the sensor 20 or for carrying signals therefrom, the device 1 can be located in environments in which it might be preferable not to have electrical components present. Moreover, since the device 1 is connected to the rest of the apparatus 100 optically, such as by one or more optical fibres, a weight saving may also be made over arrangements that do require electrical wiring.

In the above-described embodiments, as noted above, the device 1 is arranged so that the maximum strength detectable by the sensor 20 of a first magnetic field of a first of the magnetic regions 11 is different to the maximum strength detectable by the sensor 20 of a second magnetic field of a second of the magnetic regions 12. Therefore, the sensor 20 detects a greater change in magnetic field strength as the body 10 rotates relative to the sensor 20, as compared to an alternative arrangement in which the maximum strength detectable by the sensor 20 of the first magnetic field is the same as the maximum strength detectable by the sensor 20 of the second magnetic field. Accordingly, the device 1 is better able to detect relatively low rotational speeds of the body 10.

In other embodiments, which may be respective variations to the embodiments discussed above, the third magnetic regions 13 may be omitted. Such devices would still be usable in determining the rotational speed of the body 10, and such apparatuses would still be for determining the rotational speed of the body 10.

In each of the above-discussed embodiments, the body 10 comprise a plurality each of the first and second (and third, where provided) magnetic regions 11, 12, 13. However, in other embodiments, the body 10 may comprise only one of each of the first, second and third magnetic regions 11, 12, 13. The first, second and third magnetic regions 11, 12, 13 may still have respective different magnetic field strengths. In some such other embodiments, the second magnetic region 12 may be circumferentially located on the body 10 between the first and third magnetic regions 11, 13.

In each of the above-discussed embodiments the first, second and third (where provided) magnetic regions 11, 12, 13 have different respective magnetic field strengths. In other embodiments, the magnetic characteristic that differs between the first, second and third (where provided) magnetic regions 11, 12, 13 may be other than magnetic field strength, such as magnetic field direction. In such other embodiments, the sensor 20 would be for detecting the magnetic characteristic of the respective first, second and third

(where provided) magnetic regions 11, 12, 13 as the body 10 rotates relative to the sensor 20.

In the above-described embodiments, the sensor 20 need not be kept clean, or as clean, as a pure optical sensor for optically sensing the position of the body 10. Therefore, the device 1 can be located in environments in which the sensor 20 could get dirtied.

In still further embodiments, the characteristic that differs between the first, second and third regions 11, 12, 13 may be other than a magnetic characteristic. The characteristic could, for example, be a visual characteristic, such as colour or tone, or a dimensional characteristic, such as radius or axial thickness of the body 10. In such further embodiments, the first, second and third regions 11, 12, 13 may or may not be magnetic. In such further embodiments, the sensor 20 would be suitable for detecting the characteristic of the respective first, second and third regions 11, 12, 13 as the body 10 rotates relative to the sensor 20. The, or each, sensor could be, for example, an optical sensor, a proximity sensor, or the like.

Any of the above-described devices 1 and apparatuses 100 may be comprised in a vehicle, such as an aircraft. For example, any of the devices 1 and apparatuses 100 may be comprised in aircraft landing gear, which comprises a wheel relative to which the body 10 of the device 1 or apparatus 100 is rotatably fixed. The device 1 or apparatus 100 can thus be used to determine the rotational speed and/or rotational direction of the wheel of the landing gear. Such information can be used, for example, in determining whether the wheel is skidding, in controlling the movement of the wheel during spin-up prior to landing, or in determining the speed of the aircraft as it taxis along the ground, for example.

Referring to Figure 4, there is shown a schematic side view of an example of aircraft landing gear of an embodiment of the invention. The aircraft landing gear 300 comprises a wheel 310 for contacting the ground during landing, take-off or taxiing of the aircraft to which the landing gear 300 is to be connected. The aircraft landing gear 300 also comprises a strut 320 to which the wheel 310 is rotatably connected for rotation about an axis 330. The landing gear 300 of this embodiment comprises the device 1 of Figures 1 and 2. The body 10 of the device 1 is fixed relative to the wheel 310, and the sensor 20 of the device 1 is fixed relative to the strut 320. In use, as the wheel 310 rotates relative to the sensor 20, so too does the body 10. Therefore, the rotational direction and/or the rotational speed of the wheel 310 may be determined, as discussed above.

In some embodiments, the landing gear 300 may comprise a plurality of wheels 310 for contacting the ground. In some of those embodiments, the body 10 may be rotatably fixed relative to one, some, or all of the wheels 310.

Referring to Figure 5, there is shown a schematic side view of an example of an aircraft according to an embodiment of the invention. The aircraft 400 comprises the landing gear 300 of Figure 4. In other respective embodiments, the aircraft 400 may comprise any of the landing gears of the other embodiments discussed above.

Devices and apparatuses embodying the present invention could also be comprised in mechanisms of aircraft other than landing gear, in which mechanisms the rotational direction and/or speed of a rotating body is to be determined and/or controlled. Such mechanisms include, for example, systems for adjusting flight control surfaces of an aircraft, and aircraft drive trains. Moreover, devices and apparatuses embodying the present invention could be comprised in vehicles other than aircraft, such as road vehicles or rail vehicles.

The embodiments described herein are respective non-limiting examples of how the present invention, and aspects of the present invention, may be implemented. Any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined by the accompanying claims.

## Claims

1. A device for use in determining the rotational speed of a body, the device comprising:
a sensor for detecting the strength of a magnetic field; and
a body that is rotatable relative to the sensor about an axis, the body comprising a plurality of circumferentially spaced magnetic regions;
wherein the device is arranged so that during rotation of the body relative to the sensor the maximum strength detectable by the sensor of a first magnetic field of a first of the magnetic regions is different to the maximum strength detectable by the sensor of a second magnetic field of a second of the magnetic regions.

2. The device of claim 1, wherein the magnetic field strength of the second magnetic region is greater than the magnetic field strength of the first magnetic region.

3. The device of claim 1 or claim 2, wherein the device is arranged so that the maximum strength detectable by the sensor of a third magnetic field of a third of the magnetic regions is different to each of the maximum strengths detectable by the sensor of the first and second magnetic fields;
optionally wherein the magnetic field strength of the second magnetic region is greater than the magnetic field strength of the first magnetic region, and wherein the magnetic field strength of the third magnetic region is greater than the magnetic field strength of the second magnetic region.

4. The device of claim 3, wherein the second magnetic region is circumferentially located on the body between the first and third magnetic regions; optionally wherein the body comprises a plurality of each of the first, second and third magnetic regions, and wherein each of the second magnetic regions is circumferentially located on the body between one of the first magnetic regions and one of the third magnetic regions.

5. The device of any one of the preceding claims, wherein the sensor is for producing a signal which is indicative of a strength of a magnetic field detected by the sensor.

6. A device for use in determining a rotational direction of a body, the device comprising:
a sensor; and
a body that is rotatable relative to the sensor about an axis, the body comprising circumferentially spaced first, second and third regions, wherein a characteristic of each of the first, second and third regions differs from the characteristic of each other of the first, second and third regions;
wherein the sensor is for detecting the characteristic of the respective first, second and third regions in turn as the body rotates relative to the sensor.

7. The device of claim 6, wherein the body comprises a plurality of each of the first, second and third regions, and wherein each of the second regions is circumferentially located between one of the first regions and one of the third regions.

8. The device of claim 6 or claim 7, wherein the characteristic is a magnetic characteristic;
optionally wherein the magnetic characteristic is magnetic field strength;
further optionally wherein the magnetic field strength of each of the first, second and third regions is greater than zero.

9. The device of any one of the preceding claims, wherein the magnetic regions are equally radially spaced from an axis about which the body is rotatable relative to the sensor;
and/or wherein the magnetic regions are aligned axially relative to each other;
and/or wherein the magnetic regions are equally circumferentially spaced apart from each other;
and/or wherein the body comprises a member, and each of the regions comprises a discrete magnetic element carried by the member.

10. The device of any one of the preceding claims, wherein the sensor is a magnetostrictive sensor or a magnetostrictive optical sensor;
optionally wherein the magnetostrictive optical sensor comprises an optical element located in an optical fibre;
further optionally wherein the optical element comprises a Fibre Bragg Grating (FBG).

11. The device of claim 10, wherein the magnetostrictive optical sensor comprises a magnetostrictive element and an optical element mechanically connected to the magnetostrictive element, wherein a change in shape or dimension of the magnetostrictive element causes a change in shape or dimension of the optical element.

12. Apparatus for determining the rotational speed of a body, wherein the apparatus comprises a device according to claim 5, and wherein the apparatus is arranged to determine a rotational speed of the body relative to the sensor based on first and second signals produced by the sensor which are respectively indicative of strengths of the first and second magnetic fields detected by the sensor.

13. Apparatus for determining the rotational direction of a body, wherein the apparatus comprises a device according to claim 6, and wherein the apparatus is arranged to determine a rotational direction of the body relative to the sensor based on signals produced by the sensor which are respectively indicative of the characteristic of the first, second and third regions detected by the sensor.

14. Aircraft landing gear comprising the device of any one of claims 1 to 11 or the apparatus of any one of claims 12 to 13, and a wheel, wherein the body is rotatably fixed relative to the wheel.

15. A vehicle comprising the device of any one of claims 1 to 11 or the apparatus of any one of claims 12 to 13;
optionally wherein the vehicle is an aircraft;
further optionally wherein the aircraft comprises the aircraft landing gear of claim 14.

16. A method of determining the rotational speed of a body, the method comprising:
rotating a body comprising a plurality of circumferentially spaced magnetic regions about an axis and relative to a sensor for detecting the strength of a magnetic field;
detecting by the sensor a strength of a first magnetic field of a first of the magnetic regions during the rotation of the body relative to the sensor, and producing by the sensor a first signal which is indicative of the detected strength of the first magnetic field;
detecting by the sensor a strength of a second magnetic field of a second of the magnetic regions during the rotation of the body relative to the sensor, and producing by the sensor a second signal which is indicative of the detected strength of the second magnetic field, wherein the strength detected by the sensor of the first magnetic field is different to the strength detected by the sensor of the second magnetic field; and
determining, based on the first and second signals, a rotational speed of the body relative to the sensor.

17. A method of determining the rotational direction of a body, the method comprising:
rotating a body comprising circumferentially spaced first, second and third regions about an axis and relative to a sensor, wherein a characteristic of each of the first, second and third regions differs from the characteristic of each other of the first, second and third regions; and
detecting by the sensor the characteristic of the first, second and third regions as the body rotates relative to the sensor, and producing by the sensor signals which are respectively indicative of the detected characteristic of the first, second and third regions; and
determining, based on the signals, a rotational direction of the body relative to the sensor.
